# EUROPEAN PATENT SPECIFICATION

(11) **EP 1 208 361 B1**
(45) Date of publication and mention of the grant of the patent: **30.03.2005**
(21) Application number: 00959548.9
(22) Date of filing: 29.08.2000
(51) Int. Cl.: G01G 19/414

(54) **METHOD OF CLASSIFYING WEIGHT INFORMATION IN A VEHICLE WEIGHT CLASSIFICATION SYSTEM**
VERFAHREN ZUM KLASSIFIZIEREN VON GEWICHTINFORMATION IN EINEM FAHRZEUGGEWICHTKLASSIFIKATIONSSYSTEM
PROCEDE DE CLASSIFICATION D'INFORMATIONS PONDERALES DANS UN SYSTEME DE CLASSIFICATION PONDERALE AUTOMOBILE

(30) Priority: 03.09.1999 US 152420 P; 03.09.1999 US 152425 P
(43) Date of publication of application: 29.05.2002
(73) Proprietor: Siemens VDO Automotive Corporation, Auburn Hills, Michigan 48326 (US)
(72) Inventor: REICH, Daniel, Macomb, MI 48042 (US); QUAIL, Alanna, Marie, Oakland Twp., MI 48306 (US); GARCIA, Emmanuel, V., Sterling Heights, MI 48310 (US)
(74) Representative: Neill, Andrew Peter
(86) International application number: PCT/US2000/023681
(87) International publication number: WO 2001/018506

(56) References cited:
- WO-A-97/10115
- WO-A-98/14345
- WO-A-99/24285
- WO-A-99/38731
- US-A- 6 070 115

## Description

### BACKGROUND OF THE INVENTION

This invention generally relates to vehicle weight classification systems. More particularly, this invention relates to a method of classifying weight information in a vehicle weight classification system.

Modem day vehicles include several types of safety restraint devices. Conventional seat belts are provided to secure drivers and passengers in a safe position on their seat. Additionally, airbags have been included in vehicles as an additional safety restraint device to prevent injury during an accident. While airbags have proven useful, they are not without drawbacks. One issue that has been recognized in the industry is that it would be advantageous to customize the deployment of an airbag based upon a seat occupant's size or weight.

Current systems for measuring the weight of a seat occupant are complex and expensive. Sensors are placed at a plurality of locations in the seat bottom and the combined output from the sensors is used to determine the weight of the seat occupant Each sensor experiences a substantially vertical force, due to the weight of the seat occupant, but is also subject to longitudinal and lateral forces caused by acceleration, deceleration, turning, or adverse road conditions. The lateral and longitudinal forces picked up by the sensor incorporate an error component into the weight measurement. These sensors often cannot correct error due to changes in occupant seating position or adverse road conditions.

Information from the weight classification system preferably is used to control the operation of the airbag in the event of an accident. Some systems attempt to classify seat occupants into predetermined customer-specified classes usually based only on occupant weight. The classification information is then used to modify the deployment of the airbag. These systems do not provide accurate and consistent classification over a wide range of adverse road conditions and/or occupant seating conditions. Various weight classification systems are described in patent WO-97-10115, WO-98-14345, WO-99-24285, US-A-6070115 and WO-99-38731.

Those skilled in the art are constantly striving to make improvements to vehicle safety systems. This invention presents a more robust decision strategy for classifying weight information that is then used to control airbag deployment. A system designed according to this invention makes more intelligent decisions regarding weight classification compared to prior techniques.

### SUMMARY OF THE INVENTION

In general terms, this invention is a method for classifying weight information in a vehicle weight classification system.

One aspect of the preferred method of this invention includes several steps. First, a plurality of classification zones are defined that correspond to vehicle manufacturer weight classifications. A determination is made when the weight information is within one of the zones. Whenever the weight information is within a zonc, a value for that zone is increased. The weight information is classified into the classification associated with the zone that has the highest value.

In one example, the value of each zone is determined by monitoring a representation of the weight information within the zone over time. A summation of that representation is used to determine a value for the zone. Additionally, whenever the weight information is not in a zone, the value of that zone preferably is decreased by a predetermined factor.

In one disclosed embodiment of this invention, the method for classifying a seat occupant into a weight class includes the following steps. The seat occupant weight is measured resulting in an estimated weight. The estimated weight is compared to a series of weight classes with thresholds to determine a class sample. The previous steps are repeated until a predetermined number of class samples having the same value is achieved and the class sample becomes locked as the occupant weight class.

Additional steps include generating an occupant weight class signal corresponding to the locked occupant weight class, transmitting the occupant weight class signal to a control unit, and modifying deployment of an airbag based on the occupant weight class signal. The weight class is unlocked when a predetermined number inconsistent class samples is observed. When the class is unlocked, the process repeats.

Once the occupant has been classified into a weight class, that class becomes the known class for the next comparison. Preferably, each weight class is assigned an upper threshold and a lower threshold. At each iteration, the estimated weight is compared to the upper and lower thresholds for the last known weight class. The new class sample is designated the same as the last known weight class if the estimated weight is between the upper and lower thresholds for the last known weight class. The sample is set equal to a next higher weight class if the estimated weight is greater than the upper threshold for the last known weight class or the class sample is set equal to a next lower weight class if the estimated weight is less than the lower threshold for the last known weight class.

In one disclosed embodiment, the value of the upper threshold of the class sample is increased by a first predetermined amount and the value of the lower threshold of the class sample is decreased by a second predetermined amount after the class sample is locked. The upper and lower thresholds are returned to their initial values when the class sample becomes unlocked.

The subject invention uses varying weight class thresholds and class sample histories to produce a more stable, accurate and robust classification process that reduces errors caused by changes in occupant seating position and adverse road conditions. The more accurate classification system is used to generate control signals, which are used to modify airbag deployment.

The various features and advantages of this invention will become apparent to those skilled in the art from the following detailed description of the currently preferred embodiments. The drawings that accompany the detailed description can be briefly described as follows.

### BRIEF DESCRIPTION OF THE DRAWINGS

Figure 1 schematically illustrates a weight classification system designed according to this invention.
Figure 2 graphically illustrates an implementation of the method of this invention.
Figure 3 is a flowchart diagram illustrating a preferred method of this invention.
Figure 4 is a more detailed flowchart diagram illustrating a preferred method of this invention.
Figure 5 is a graph showing the relationship between track and lock thresholds.
Figure 6 is a flowchart describing the method of determining a weight class sample.
Figure 7 is a flowchart describing the tracking and locking processes.

### DETAILED DESCRIPTION OF A PREFERRED EMBODIMENT

A vehicle weight classification system 20 is used to determine the weight of a person or load on a vehicle seat 22. The seat back 24 and seat base 26 are conventional except for the inclusion of a plurality of sensors 28 in the seat base 26. The sensors 28 gather information regarding the weight of an occupant of the seat 22 and provides signals to a control module 30, which preferably determines an approximate weight of the individual in the seat 22. More details regarding a weight determination or weight classification system with which this invention preferably is used can be found in United States Patent Application No. US-A-6070115, filed on November 12, 1998, which is commonly owned with this application. The teachings of that specification are incorporated into this specification by reference.

A weight classification module 32 preferably communicates with the weight determining module 30 and processes the weight information in a manner according to this invention. Although individual modules 30 and 32 are illustrated for discussion purposes, those skilled in the art will appreciate that a single controller may perform both weight determination functions and weight classification functions as may be needed in a given situation. The weight classification module 32 preferably comprises a suitably programmed microprocessor that gathers determined weight information and places it within a classification defined by a vehicle manufacturer or supplier.

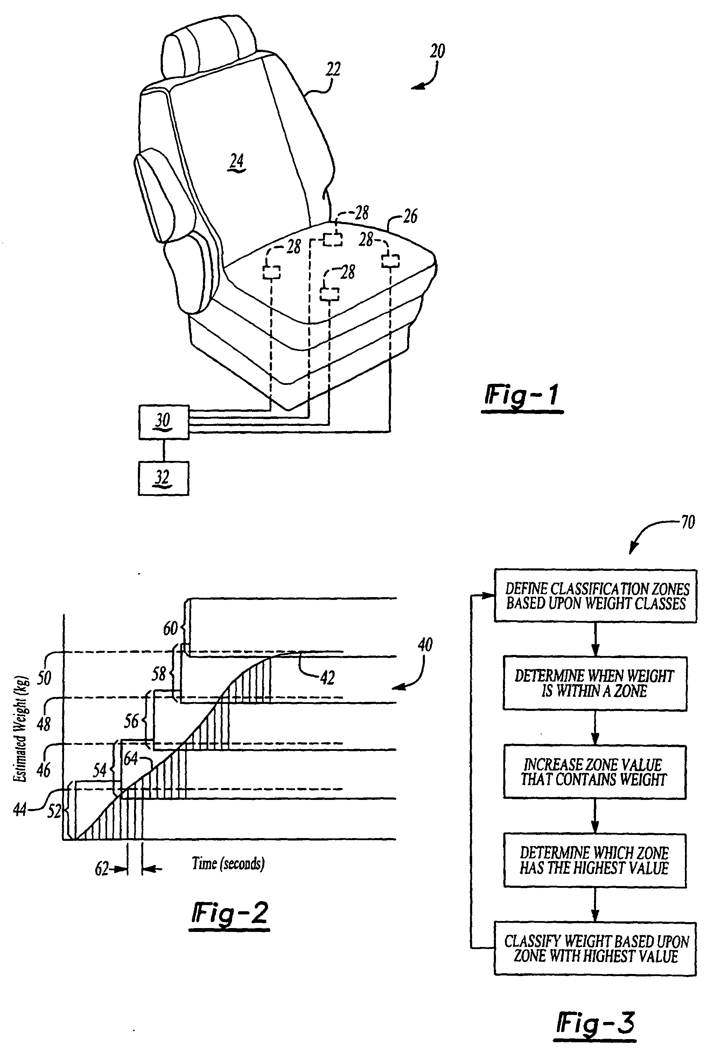

Figure 2 graphically illustrates an implementation of the methodology of this invention. A graph 40 of the estimated weight information over time is shown by the curve 42. A set of weight classifications, which preferably are determined by a vehicle manufacturer or airbag supplier, are illustrated by the thresholds 44, 46, 48 and 50. If the determined weight is below the threshold 44, for example, it fits within a first weight classification. The weight classifications correspond to a mode of airbag control or deployment. This invention provides a more robust and more intelligent strategy for deciding which classification the weight information fits into rather than simply placing the weight information into a current classification depending on an instantaneous output of the sensors 28.

A plurality of classification zones are defined and associated with the predetermined weight classifications. For example, zone 52 is associated with the weight classification 44 while zone 56 is associated with a third weight classification having a lower threshold at 46 and an upper threshold at 48. The other zones 54, 58 and 60 each correspond to a weight classification.

In the preferred embodiment of this invention, the upper limit of each classification zone preferably extends beyond the upper threshold of the corresponding weight classification. Additionally, the lower limit of each zone preferably extends below the lowest threshold of that weight classification. Additionally, the upper limit of one zone preferably overlaps the lower limit of an adjacent zone. Overlapping zone limitations provides additional decision making capability within the weight classification system of this invention.

The proper weight classification preferably is determined by determining a value within each zone that corresponds to the amount of time that the weight information is within the zone. In the illustrated example, integrating the area underneath the curve 42 within each zone provides a value for each zone, respectively. The integrated information provides the value of that zone.

It is most preferred to utilize some information within two zones at the same time. For example, at 62 the curve 42 passes through the first zone 52 and the second zone 54. Therefore, the value of each of those two zones preferably is increased based upon the weight information at 62.

The weight classification preferably is determined as the classification associated with the zone that has the highest value. In the illustrated example, the zone within which the greatest integration result is achieved is considered the zone and the associated classification for the weight information. By monitoring the weight information over time and gathering increasing value information, the system 20 is'capable of making a more robust and more accurate determination of the weight classification. Instead of merely sampling the weight information at any given time and assigning the weight classification as that classification in which a particular sampled weight information exists, the use of zones and integrating the weight information within each zone provides a more accurate weight classification determination. For example, even though the weight information is at 64 at one point in time, the system 20 determines that the weight information should be classified within the first classification beneath the threshold 44 even though the weight information at that instant is within the second classification between the threshold 44 and 46.

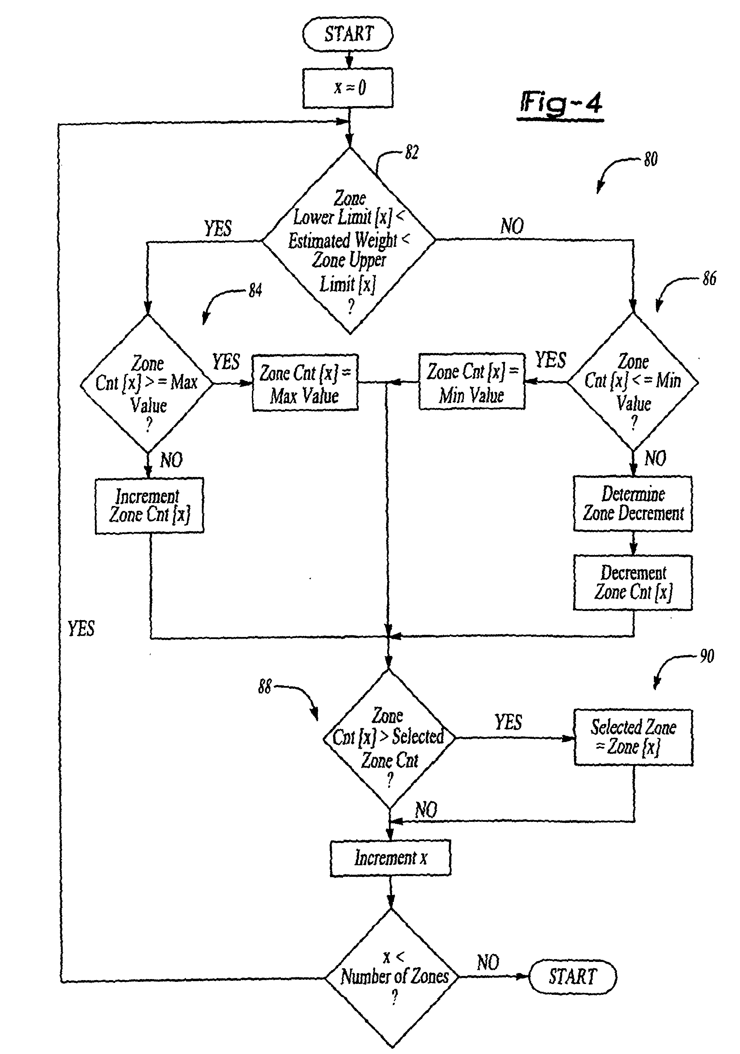

Figure 3 includes a flowchart diagram 70 that summarizes the preferred method of this invention. The classification zones 52, 54, 56, 58 and 60 preferably are defined based upon the weight classifications that have been previously determined. As discussed above, the upper and lower limits of each zone preferably overlap the limits of the corresponding classifications and preferably overlap adjacent zone limits. The determination module 32 determines when the weight is within a particular zone. A value for that zone is increased whenever the weight information is in that zone. The zone having the highest value is determined and the weight information is classified based upon the zone with the highest value.

Figure 4 includes a flowchart 80 that illustrates, in more detail, the preferred method of this invention. At 82, the controller module 32 determines whether the estimated weight is within a given zone. If the weight is within a zone, then the steps at 84 are processed to increase the value of that zone up to a maximum value. A maximum value preferably is set for each zone so that if the weight information stays within a zone over a prolonged period of time, that zone value does not increase beyond a chosen maximum. For each zone that does not contain the weight information, the steps at 86 preferably are completed. When a zone does not include the weight information, the value for that zone preferably is decreased by a predetermined forgetting factor. This accommodates situations where the weight moves from one zone into another zone and allows the second zone to become the classification within a shorter period of time than if the value for the first zone were not decreased. The value for each zone preferably is only decreased to a chosen minimum value to avoid having extremely low zone values that may later inhibit an accurate weight determination. At 88, a determination is made whether the current zone or classification of the weight information is less than the value of the zone in which the weight information currently exists. Whenever a new zone has a higher value than a currently selected zone, the switch is made at 90 to the new zone and the weight classification is changed accordingly.

Another aspect of this invention is determining the boundaries or definitions of the weight classifications. The weight measurements taken by the sensors 28 can vary as the seat occupant changes seating positions and can vary as the vehicle travels through various maneuvers and over different types of roads. In order to provide a consistent and accurate weight classification, the classification process must filter out these variations. The subject invention monitors the occupant's estimated weight and compares the estimated weight to a series of weight class thresholds to determine an individual classification sample. A history of these class samples is observed and recorded by the control unit 30 and/or the classification module 32. Once a predetermined number of consistent and consecutive samples are observed, the class sample is locked as the occupant's weight class. Over time, a plurality of comparisons are made between the estimated weight and the weight class thresholds.

Each weight class is assigned a predetermined upper threshold and a predetermined lower threshold. The number and values for the upper and lower thresholds can be varied. Each weight class sample is determined by comparing the occupant's estimated weight against the previous weight class sample's thresholds. If the estimated weight falls between the upper and lower thresholds for that previous class, the current class sample is set to that last sample. If the estimated weight does not fall between the upper and lower thresholds for that previous class, either the weight class above or the weight class below the previous weight class is set for the current weight class depending on which threshold is crossed. Preferably, only one incremental weight class change is permitted for each iteration. Allowing a change of only one class per iteration helps to smooth the transition between the classes.

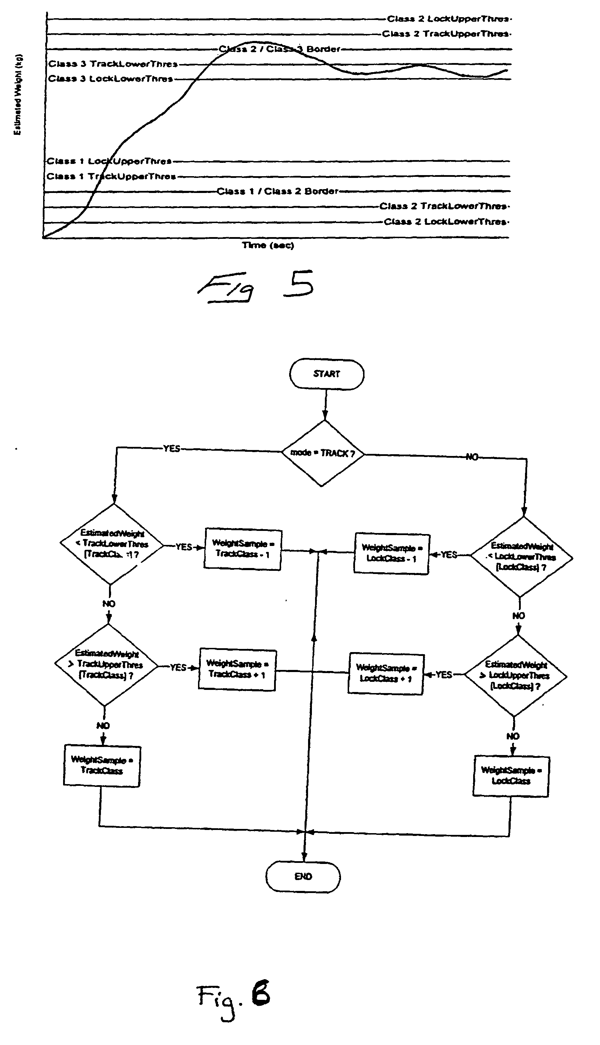

The upper and lower thresholds for each class varies depending on whether the process is in the track mode or the lock mode. If the system is locked onto a specific weight class, the separation between the upper and lower thresholds for that weight class is increased to provide more hysteresis. By increasing the hysteresis when locked, it is more difficult to change or unlock the weight class designation. This helps to filter out unintended weight class changes, i.e., error induced by adverse road conditions or changes in occupant seating position. Figure 5 shows the relationship between the track and lock thresholds. Note that the track upper and lower thresholds for weight class two (2) are closer together than the lock upper and lower thresholds for weight class two (2). Thus, the upper threshold for weight class (2) is increased and the lower threshold is decreased when class (2) is the locked class.

Figure 6 is a flow chart showing the process for determining the current weight class sample. When the process is started, there is a determination of whether the process is in the track or lock mode. If the process is in the track mode than the current estimated weight is compared to the previous class' track lower threshold. If the current estimated weight is less than the previous class' track lower threshold than the next lower weight class is set as the current weight class. If the current estimated weight is not less than the previous class' track lower threshold than the estimated weight is compared to the previous class' track upper threshold. If the current estimated weight is greater than the previous class' track upper threshold than the next higher weight class is set as the current weight class. If the current estimated weight is not greater than the previous class' track upper threshold than the current weight class is the same as the previous weight class. A similar method is used when the process is in the lock mode except the current estimated weight is compared to the previous class' lock upper and lower thresholds.

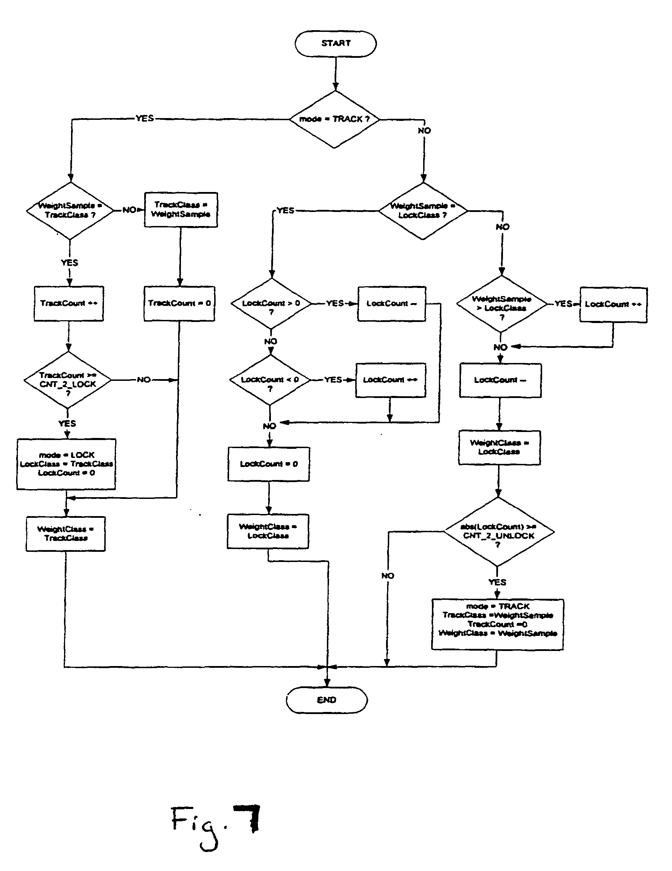

As the process moves through each iteration, a history of the comparisons between the estimated weight and the weight class thresholds is observed and recorded, see Figure 7. The weight class samples are monitored, looking for the same class sample to be repeated. The process starts counting or tracks consecutive samples of the same weight class. If a non-consistent sample is observed, the count is reset to zero. When a predetermined number of consistent and consecutive samples is observed, that observed weight class becomes locked. Once a class is locked, it remains the designated occupant weight class until a specific number of consecutive weight class samples above or below the locked class is observed. If the lock is lost, the process starts tracking the number of consecutive weight classes again and the process is repeated. The output is either the tracked or locked weight class, depending on the mode. If a class is locked, the locked class is the output class. If a class is not locked, the track weight class is the output class. The track/lock feature helps to filter out class changes caused by occupants 20 that change position, class changes caused by adverse road conditions, and class changes resulting from sudden vehicle maneuvers such as turning or braking.

Given this description, those skilled in the art will be able to choose from among commercially available microprocessors to realize the functions of the controller weight classification modules 30 and 32. Similarly, those who have the benefit of this description will be able to design custom circuitry or software to accomplish the method of this invention.

This invention provides the advantage of customizing transition rates between weight classifications and enhances the intelligence of a decision making process in that regard.

The preceding description is exemplary rather than limiting in nature. Variations and modifications to the disclosed embodiments may become apparent to those skilled in the art that do not necessarily depart from this invention, which is defined by the following claims.

## Claims

1. A method of determining a classification of determined weight information, comprising the steps of:
(A) defining a plurality of classification zones;
(B) determining when the weight information is within one of the zones;
(C) increasing a value for the zone in which the weight information is when the weight information is in said zone; by an amount which corresponds to the amount of time that the weight information is within the zone;
(D) determining which of the zones has the highest value; and
(E) classifying the weight information into the classification zone having the highest value.

2. The method of claim 1, wherein step (B) includes monitoring the weight information over time and determining a representation of the weight information over time.

3. The method of claim 2, including integrating a value of the representation of the weight information within each of the zones and using the integrated value when performing step (D).

4. The method of claim 1, wherein step (C) includes determining a summation of a representation of the weight information over time within the zone in which the weight information is and using the summation as the value of the zone.

5. The method of claim 1, including performing step (C) for the zone in which the weight information is only until a maximum value for the zone is reached.

6. The method of claim 1, wherein step (A) includes having portions of adjacent zones overlap such that the weight information can be within two zones simultaneously.

7. The method of claim 6, including simultaneously performing steps (B) and (C) for each of two adjacent zones when the weight information is within each of the adjacent zones.

8. The method of claim 1, including decreasing a value for each of the other zones when the weight information is not in the other zones.

9. The method of claim 8, wherein the step of decreasing a value is performed for the other zones, respectively, only until a minimum value for the other zones is reached, respectively.

10. The method of claim 6, wherein there is a first zone and a last zone and including setting the upper limit of all of the zones excluding the last zone to be above a lower limit of an adjacent zone and setting the lower limit of all of the zones excluding the first zone to be below the upper limit of an adjacent zone.

11. A system for classifying weight information within one of a plurality of classes in a vehicle weight classification assembly, comprising:
(a) a controller that determines when the weight information is within at least one of a plurality of zones associated with the classes, increases a value for a zone when the weight information is within said zone, by an amount which corresponds to the amount of time that the weight information is within the zone, and determines which of the zones has the highest value and classifies the weight information into the class associated with the zone having the highest value.

12. The system of claim 11, wherein the controller increases a value of a zone containing the weight information and decreases a value of any zone that does not contain the weight information.

13. The system of claim 11, wherein the controller determines a summation of a representation of the weight information within each zone and uses the summation as the value of the zone to make the classification determination.

14. A system as claimed in claim 11, wherein means to obtain weight information comprises;
a sensor assembly for measuring the weight of a seat occupant to generate an estimated weight signal;
and wherein each zone has an upper threshold and a lower threshold; and step (a) is performed by the controller;
receiving said estimated weight signal, comparing said signal to said upper and lower thresholds to assign said signal an appropriate weight class designation, and for locking said signal into an occupant specific weight class when a predetermined number of consistent and consecutive weight class designations is achieved.

15. A system according to claim 14, including an airbag controller for controlling deployment of an airbag wherein said control unit generates a control signal and transmits said control signal to said airbag controller to modify deployment of said airbag based on said occupant specific weight class.

16. A method for classifying a seat occupant into a weight class comprising the steps of:
(a) measuring the weight of a seat occupant to generate an estimated weight;
(b) comparing the estimated weight to a series of weight classes each having at least one weight class threshold to determine an individual classification sample;
(c) repeating steps (a) and (b) until a predetermined number of individual classification samples having the same value is achieved; and
(d) locking the individual classification sample as the occupant weight class.

17. The method according to claim 16, including the steps of generating an occupant weight class signal after step (d), transmitting the occupant weight class signal to a control unit, and modifying deployment of an airbag based on the occupant weight class signal.

18. The method according to claim 17, including the steps of:
(e) unlocking the individual classification sample when a predetermined number of non-equal individual classification samples is achieved; and
(f) returning to step (a) when step (e) is satisfied.

19. The method according to claim 18, wherein step (b) further includes assigning each weight class an upper threshold and a lower threshold, comparing the estimated weight to the upper and lower thresholds for the last known weight class, and setting the individual classification sample equal to the last known weight class if the estimated weight is between the upper and lower thresholds for the last known weight class.

20. The method according to claim 19, including the step of setting the individual classification sample equal to a next higher weight class if the estimated weight is greater than the upper threshold for the last known weight class or setting the individual classification sample equal to a next lower weight class if the estimated weight is less than the lower threshold for the last known weight class.

21. The method according to claim 20, including the steps of increasing the value of the upper threshold of the individual classification sample by a first predetermined amount and decreasing the value of the lower threshold of the individual classification sample by a second predetermined amount once the individual classification sample is locked.

22. The method according to claim 20, including the steps of decreasing the value of the upper threshold of the individual classification sample by a first predetermined amount and increasing the value of the lower threshold of the individual classification sample by a second predetermined amount after the individual classification sample is unlocked.

## Patentansprüche

1. Verfahren zur Ermittlung einer Klassifizierung von bestimmten Gewichtsinformationen, mit den folgenden Schritten:
(A) Definieren von mehreren Klassifizierungszonen;
(B) Bestimmen, wann sich die Gewichtsinformationen innerhalb von einer der Zonen befindet;
(C) Erhöhen eines Wertes für die Zone, in der sich die Gewichtsinformationen befinden, wenn sich die Gewichtsinformationen in dieser Zone befinden, um einen Wert, der entspricht dem Zeitbetrag entspricht, in dem sich die Gewichtsinformationen in dieser Zone befinden;
(D) Bestimmen, welche von den Zonen den höchsten Wert aufweist; und
(E) Klassifizieren der Gewichtsinformationen in die den höchsten Wert aufweisende Klassifizierungszone.

2. Verfahren nach Anspruch 1, wobei Schritt (B) das Überwachen der Gewichtsinformationen über die Zeit und das Bestimmen einer Darstellung der Gewichtsinformationen über der Zeit umfaßt.

3. Verfahren nach Anspruch 2 mit dem Integrieren eines Wertes der Darstellung der Gewichtsinformationen innerhalb von jeder der Zonen und dem Verwenden des integrierten Wertes beim Ausführen von Schritt (D).

4. Verfahren nach Anspruch 1, wobei Schritt (C) das Bestimmen einer Summe einer Darstellung der Gewichtsinformationen über der Zeit innerhalb der Zone, in der sich die Gewichtsinformationen befinden und das Verwenden der Summe beim Ausführen von Schritt (D) umfaßt.

5. Verfahren nach Anspruch 1, mit dem Ausführen von Schritt (c) für die Zone, in der sich die Gewichtsinformationen nur solange befinden, bis ein Maximalwert für die Zone erreicht ist.

6. Verfahren nach Anspruch 1, wobei in Schritt (A) Abschnitte von benachbarten Zonen einander derart überlappen, daß sich die Gewichtsinformationen innerhalb von zwei Zonen gleichzeitig befinden können.

7. Verfahren nach Anspruch 6, mit dem gleichzeitigen Ausführen der Schritte (B) und (C) für jede von zwei benachbarten Zonen, wenn sich die Gewichtsinformationen innerhalb von jeder der benachbarten Zonen befinden.

8. Verfahren nach Anspruch 1, mit dem Vermindern eines Wertes für jede der anderen Zonen, wenn sich die Gewichtsinformationen nicht in den anderen Zonen befinden.

9. Verfahren nach Anspruch 8, wobei der Schritt des Verminderns eines Wertes jeweils für die anderen Zonen nur solange ausgeführt werden, bis jeweils ein Minimalwert für die anderen Zonen erreicht ist.

10. Verfahren nach Anspruch 6, wobei eine erste Zone und eine letzte Zone vorhanden sind, und wobei die Obergrenze sämtlicher Zonen mit Ausnahme der letzten Zone festgelegt wird, die über einer Untergrenze einer benachbarten Zone liegt, und die Untergrenze sämtlicher Zonen mit Ausnahme der ersten Zone festgelegt wird, die unter der Obergrenze einer benachbarten Zone liegt.

11. System zum Klassifizieren von Gewichtsinformationen innerhalb einer von einer Mehrzahl von Klassen in einer Gewichtsklassifizierungsanordnung für Fahrzeuge, mit:
(a) einem Steuerelement, das ermittelt, wann sich die Gewichtsinformationen innerhalb von mindestens einer von mehreren den Klassen zugeordneten Zonen befinden, einen Wert für eine Zone, wenn sich die Gewichtsinformationen innerhalb der Zone befinden, um einen Betrag erhöht, der dem Zeitbetrag entspricht, in dem sich die Gewichtsinformationen in dieser Zone befinden, und ermittelt, welche von den Zonen den höchsten Wert aufweist, und die Gewichtsinformationen in die Klasse klassifiziert, die der Zone mit dem höchsten Wert zugeordnet ist.

12. System nach Anspruch 11, wobei das Steuerelement einen Wert einer Zone erhöht, welche die Gewichtsinformationen enthält, und den Wert jeder Zone vermindert, welche keine Gewichtsinformationen enthält.

13. System nach Anspruch 11, wobei das Steuerelement eine Summe einer Darstellung der Gewichtsinformationen innerhalb jeder Zone bestimmt und die Summe als Wert der Zone verwendet, um die Bestimmung der Klassifizierung vorzunehmen.

14. System nach Anspruch 11, wobei das Mittel zum Erhalt von Gewichtsinformationen folgendes umfaßt:
eine Sensoranordnung zum Messen des Gewichts eines sitzenden Insassen zwecks Erzeugung eines Signals des geschätzten Gewichts;
und wobei jede Zone einen oberen Schwellwert und einen unteren Schwellwert aufweist; und Schritt (a) von dem Steuerelement ausgeführt wird;
das Empfangen des Signals des geschätzten Gewichts, das Vergleichen des Signals mit dem oberen und dem unteren Schwellwert zwecks Zuordnung des Signals zu einer geeigneten Gewichtsklassenbezeichnung, und zum Festlegen des Signals auf eine insasseripezifische Gewichtsklasse, wenn eine vorgegebene Anzahl von gleichbleibenden und aufeinanderfolgenden Gewichtsklassenbezeichnungen zustande gebracht ist.

15. System gemäß Anspruch 14, mit einem Airbag-Steuerelement zum Steuern des Entfaltens eines Airbags, wobei die Steuereinheit ein Steuersignal erzeugt und das Steuersignal zu dem Airbag-Steuerelement übermittelt, um das Entfalten des Airbags auf der Basis der spezifischen Gewichtsklasse des Insassen zu modifizieren.

16. Verfahren zum Klassifizieren eines sitzenden Insassen in eine Gewichtsklasse, mit den folgenden Schritten:
(a) Messen des Gewichts des sitzenden Insassen zwecks Erzeugung eines geschätzten Gewichts;
(b) Vergleichen des geschätzten Gewichts mit einer Reihe von Gewichtsklassen mit jeweils mindestens einem Gewichtsklassenschwellwert zum Bestimmen einer Personenklassifizierungsprobe;
(c) Wiederholen der Schritte (a) und (b), bis eine vorgegebener Anzahl von Personenklassifizierungsproben mit dem gleichen Wert zustande gebracht ist; und
(d) Sperren der Personenklassifizierungsprobe als Insassengewichtsklasse.

17. Verfahren nach Anspruch 16, mit den Schritten des Erzeugens eines Gewichtsklassensignals des Insassen nach Schritt (d), des Übertragens des Gewichtsklassensignals des Insassen zu einer Steuereinheit und des Modifizierens des Entfaltens eines Airbags auf der Basis des Gewichtsklassensignals des Insassen.

18. Verfahren nach Anspruch 17, mit den folgenden Schritten:
(e) Freigeben der Personenklassifizierungsprobe, wenn eine vorbestimmte Anzahl von ungleichen Klassifizierungsproben zustande gebracht ist; und
(f) Rückkehren zu Schritt (a), wenn Schritt (e) erfüllt ist.

19. Verfahren nach Anspruch 18, wobei Schritt (b) ferner das Zuordnen eines oberen und eines unteren Schwellwertes zu jeder Gewichtsklasse, das Vergleichen des geschätzten Gewichts mit dem oberen und dem unteren Schwellwert für die letzte bekannte Gewichtsklasse und das Einstellen der Personenklassifizierungsprobe als gleich der letzten bekannten Gewichtsklasse umfaßt, wenn das geschätzte Gewicht zwischen dem oberen und dem unteren Schwellwert für die letzte bekannte Gewichtsklasse liegt.

20. Verfahren nach Anspruch 19, mit dem Schritt des Einstellens der Personenklassifizierungsprobe, so daß es gleich einer nächsthöheren Gewichtsklasse ist, wenn das geschätzte Gewicht größer als der obere Schwellwert für die letzte bekannte Gewichtsklasse ist, oder des Einstellens der Personenklassifzierungsprobe, so daß es gleich einer nächstniedrigeren Gewichtsklasse ist, wenn das geschätzte Gewicht kleiner als der untere Schwellwert für die letzte bekannte Gewichtsklasse ist.

21. Verfahren nach Anspruch 20, mit den Schritten des Erhöhens des Wertes des oberen Schwellwertes der Personenklassifizierungsprobe um einen ersten vorbestimmten Wert und des Verminderns des Wertes des unteren Schwellwertes um einen zweiten vorbestimmten Wert, sobald die Personenklassifizierungsprobe freigegeben wird.

22. Verfahren nach Anspruch 20, mit den Schritten des Verminderns des Wertes des oberen Schwellwertes der Personenklassifizierungsprobe um einen ersten vorbestimmten Wert und des Verminderns des Wertes des unteren Schwellwertes um einen zweiten vorbestimmten Wert, nachdem die Personenklassifizierungsprobe freigegeben ist.

## Revendications

1. Une méthode visant à déterminer une classification d'informations pondérales déterminées, comprenant les étapes de :
(A) définition de plusieurs zones de classification ;
(B) détermination du moment où l'information pondérale s'inscrit dans l'une de ces zones ;
(C) augmentation d'une valeur pour la zone où s'inscrit l'information pondérale, lorsque l'information pondérale se trouve dans cette zone, à concurrence d'une quantité correspondant au laps de temps durant lequel l'information pondérale se trouve dans cette zone ;
(D) détermination des zones présentant la valeur la plus élevée ; et
(E) classification de l'information pondérale dans la zone de classification présentant la valeur la plus élevée.

2. La méthode selon la revendication 1, où l'étape (B) comprend le contrôle de l'information pondérale au fil du temps et la détermination d'une représentation de l'information pondérale au fil du temps.

3. La méthode selon la revendication 2, comprenant l'intégration d'une valeur de la représentation de l'information pondérale dans chacune des zones et utilisant la valeur intégrée lors de l'exécution de l'étape (D).

4. La méthode selon la revendication 1, où l'étape (C) comprend la détermination d'une sommation d'une représentation de l'information pondérale au fil du temps à l'intérieur de la zone où se trouve l'information pondérale, et l'utilisation de la sommation comme valeur de cette zone.

5. La méthode selon la revendication 1, comprenant l'exécution de l'étape (C) pour la zone dans laquelle se trouve l'information pondérale uniquement jusqu'à ce qu'une valeur maximale soit atteinte pour la zone en question.

6. La méthode selon la revendication 1, où l'étape (A) comprend le chevauchement de portions de zones adjacentes de telle sorte que l'information pondérale puisse se trouver simultanément dans deux zones.

7. La méthode selon la revendication 6, comprenant l'exécution simultanée des étapes (B) et (C) pour chacune des deux zones adjacentes lorsque l'information pondérale se trouve dans chacune desdites zones adjacentes.

8. La méthode selon la revendication 1, comprenant la diminution d'une valeur pour chacune des autres zones lorsque l'information pondérale ne se trouve pas dans lesdites autres zones.

9. La méthode selon la revendication 8, où l'étape de diminution d'une valeur est exécutée respectivement pour les autres zones uniquement jusqu'à ce que la valeur minimale soit atteinte respectivement pour les autres zones.

10. La méthode selon la revendication 6, où il existe une première zone et une dernière zone, et comprenant la fixation de la limite supérieure de toutes les zones à l'exclusion de la dernière zone étant au-dessus de la limite inférieure d'une zone adjacente, et la fixation de la limite inférieure de toutes les zones à l'exclusion de la première zone étant en dessous de la limite supérieure d'une zone adjacente.

11. Un système de classification de l'information pondérale dans une ou plusieurs classes d'un ensemble de classification de poids d'un véhicule, comprenant :
(a) un contrôleur qui détermine le moment où l'information pondérale se trouve au moins dans une ou plusieurs zones associées aux classes, qui augmente la valeur correspondant à une zone lorsque l'information pondérale se trouve dans ladite zone, d'une quantité correspondant au laps de temps durant lequel l'information pondérale se trouve dans cette zone, qui détermine laquelle des zones présente la valeur la plus élevée et qui classifie l'information pondérale dans la classe associée à la zone présentant la valeur la plus élevée.

12. Le système selon la revendication 11, où le contrôleur augmente la valeur d'une zone contenant l'information pondérale et diminue la valeur de toute zone ne contenant pas l'information pondérale.

13. Le système selon la revendication 11, où le contrôleur détermine une sommation d'une représentation de l'information pondérale à l'intérieur de chaque zone et utilise ladite sommation comme la valeur de la zone pour établir la détermination de la classification.

14. Un système selon la revendication 11, où les moyens pour obtenir l'information pondérale comprennent :
un ensemble de capteurs pour mesurer le poids de l'occupant d'un siège afin de générer un signal de poids estimé ;
et où chaque zone présente un seuil supérieur et un seuil inférieur ;
et où l'étape (a) est exécutée par le contrôleur,
en recevant ledit signal de poids estimé, en comparant ledit signal aux dits seuils supérieur et inférieur pour affecter audit signal une désignation de classe de poids appropriée, et en verrouillant ledit signal sur une classe de poids spécifique de l'occupant lorsqu'un nombre prédéterminé de désignations de classe de poids cohérentes et consécutives ont été observées.

15. Un système selon la revendication 14, comprenant un contrôleur de coussin gonflable permettant de contrôler le déploiement d'un coussin gonflable, où ladite unité de commande génère un signal de commande et transmet ledit signal de commande au dit contrôleur de coussin gonflable pour modifier le déploiement dudit coussin gonflable sur la base de ladite classe de poids spécifique de l'occupant.

16. Une méthode de classification d'un occupant de siège dans une classe de poids, comprenant les étapes de :
(a) mesure du poids de l'occupant du siège afin de générer un poids estimé ;
(b) comparaison du poids estimé avec une série de classes de poids ayant chacune au moins un seuil de classe de poids permettant de déterminer un échantillon de classification individuel ;
(c) répétition des étapes (a) et (b) jusqu'à ce qu'un nombre prédéterminé d'échantillons de classification individuels ayant la même valeur soit obtenu ; et
(d) verrouillage de l'échantillon de classification individuel comme étant la classe de poids de l'occupant.

17. La méthode selon la revendication 16, comprenant les étapes de génération d'un signal de classe de poids de l'occupant postérieurement à l'étape (d), de transmission du signal de classe de poids de l'occupant à une unité de commande, et de modification du déploiement d'un coussin gonflable sur la base du signal de classe de poids de l'occupant.

18. La méthode selon la revendication 17, comprenant les étapes de :
(e) déverrouillage de l'échantillon de classification individuel lorsqu'un nombre prédéterminé d'échantillons de classification individuels non égaux est obtenu ; et
(f) retour à l'étape (a) lorsque la condition de l'étape (e) est satisfaite.

19. La méthode selon la revendication 18, où l'étape (b) comprend en outre l'attribution à chaque classe de poids d'un seuil supérieur et d'un seuil inférieur, la comparaison du poids estimé avec les seuils supérieur et inférieur pour la dernière classe de poids connue, et la détermination d'un échantillon de classification individuel égal à la dernière classe de poids connue si le poids estimé se trouve entre les seuils supérieur et inférieur correspondant à la dernière classe de poids connue.

20. La méthode selon la revendication 19, comprenant l'étape de détermination de l'échantillon de classification individuel égal à la classe de poids immédiatement supérieure si le poids estimé est plus élevé que le seuil supérieur correspondant à la dernière classe de poids connue, ou la détermination de l'échantillon de classification individuel égal à la classe de poids immédiatement inférieure si le poids estimé est moins élevé que le seuil inférieur correspondant à la dernière classe de poids connue.

21. La méthode selon la revendication 20, comprenant les étapes d'augmentation de la valeur du seuil supérieur de l'échantillon de classification individuel en y ajoutant une première quantité prédéterminée, et de diminution de la valeur du seuil inférieur de l'échantillon de classification individuel en en soustrayant une seconde quantité prédéterminée lorsque l'échantillon de classification individuel est verrouillé.

22. La méthode selon la revendication 20, comprenant les étapes de diminution de la valeur du seuil supérieur de l'échantillon de classification individuel en en soustrayant une première quantité prédéterminée, et d'augmentation de la valeur du seuil inférieur de l'échantillon de classification individuel en y ajoutant une seconde quantité prédéterminée après avoir déverrouillé l'échantillon de classification individuel.
